# EUROPEAN PATENT SPECIFICATION

(11) **EP 1 129 115 B1**
(45) Date of publication and mention of the grant of the patent: **08.12.2004**
(21) Application number: 99971005.6
(22) Date of filing: 21.10.1999
(51) Int. Cl.: C08F 210/02, C08F 4/643

(54) **OLEFIN COPOLYMERIZATION PROCESS WITH BRIDGED HAFNOCENES**
VERBRÜCKTE HAFNOCENEN FÜR DIE COPOLYMERISATION VON OLEFINEN
PROCEDE DE COPOLYMERISATION OLEFINIQUE AVEC DES HAFNOCENES PONTES

(30) Priority: 23.10.1998 US 105329 P
(43) Date of publication of application: 05.09.2001
(73) Proprietor: ExxonMobil Chemical Patents Inc., Baytown, TX 77520-5200 (US)
(72) Inventor: RODRIGUEZ, George, Houston, TX 77059 (US); CROWTHER, Donna, J., Seabrook, TX 77586 (US)
(74) Representative: Veldhuizen, Albert Dirk Willem
(86) International application number: PCT/US1999/024600
(87) International publication number: WO 2000/024792

(56) References cited:
- EP-A- 0 786 466
- EP-A- 0 824 113
- WO-A-96/28480
- WO-A-97/29845
- WO-A-99/45040
- CHEMICAL ABSTRACTS, vol. 124, no. 14, 1 April 1996 (1996-04-01) Columbus, Ohio, US; abstract no. 177218, INOE, NORIHIDE ET AL: "Novel transition metal compounds for polymerization of olefins with improved efficiency and polymerization of olefins using them" XP002130381 & JP 07 247309 A (MITSUI TOATSU CHEMICALS, JAPAN) 26 September 1995 (1995-09-26)

## Description

### TECHNICAL FIELD

This invention relates to olefin copolymerization processes using substituted hafnocene catalyst compounds with noncoordinating anions.

### BACKGROUND ART

Olefin polymers comprising ethylene and at least one or more α-olefin and optionally one or more diolefin make up a large segment of polyolefin polymers and will be addressed as "ethylene copolymers" herein. Such polymers range from crystalline polyethylene copolymers to largely amorphous elastomers, with a new area of semicrystalline "plastomers" in between. In particular, ethylene copolymer plastomers are now a well established class of industrial polymers having a variety of uses associated with their unique properties, such as elastomeric properties and their thermo-oxidative stability. Uses of the plastomers include general thermoplastic olefins, films, wire and cable coatings, polymer modification (by inclusion in blends with other polyolefins), injection molding, foams, footwear, sheeting, functionalized polymers (such as by free-radical graft addition of polar monomers) and components in adhesive and sealant compounds.

Commercially prepared ethylene copolymers have been traditionally been made via Ziegler-Natta polymerization with catalyst systems largely based on vanadium or titanium. Newer metallocene catalyst compounds have received attention due to their ease of larger monomer incorporation and potential increases in polymerization activities. U.S. patent 5,324,800 describes metallocenes having substituted and unsubstituted cyclopentadienyl ligands which are suitable for producing high molecular weight olefin polymers, including linear, low density copolymers of ethylene with minor amounts of α-olefin.

Noncoordinating anions useful as catalyst components with such metallocenes is known. The term "noncoordinating anion" is now accepted terminology in the field of olefin polymerization, both by coordination or insertion polymerization and carbocationic polymerization. The noncoordinating anions function as electronic stabilizing cocatalysts, or counterions, for cadonic metallocenes which are active for olefin polymerization. The term "noncoordinating anion" as used here and in the references applies both to noncoordinating anions and weakly coordinating anions that are not so strongly coordinated to the catiouic complex as so to be labile to replacement by olefinically or acetylenically unsaturated monomers at the insertion site, U.S. patent 5,198,401 describes a preferred noncoordinating anion tetra(perflourophenyl) boron, [B(pfp)₄]⁻ or [B(C₆F₅)₄]⁻ wherein the perfluozinated phenyl ligands on the boron makes the counterion labile and stable to potential adverse reactions with the metal cadon complexes.

The utility of metallocene-based ionic catalysts in high temperature olefin polymerization is described in U.S. patents 5,408,017 and 5,767,208, EP 0 612 768, and WO 96/33227. Each addresses suitable metallocene catalysts for high temperature processes for olefin copolymerization. High molecular weight ethylene/α-olefin copolymers is an objective of EP 0 612 768 and is addressed with catalyst systems based on bis(cyclopentadienyl/indenyl/fluorenyl) hafnocenes which are combined with an alkyl aluminum compound and an ionizing ionic compound providing a non-coordinating anion.

As described above, a recognized problem for high temperature polymerization, particularly where significant content of comonomer incorporation in ethylene copolymers is to be sought, is an observed decrease in molecular weight, or increase in melt index (MI). Means of maintaining high molecular weights, or low M.I., in ethylene copolymers of low density (high comonomer content) while operating at economically preferable high polymerization reaction temperatures and high polymer production rates is highly desirable.

### BRIEF SUMMARY OF THE INVENTION

The invention thus addresses specifically substituted, bridged hafnocene catalyst complexes comprising noncoordinating anions that are surprisingly stable under high temperature olefin polymerization processes such that olefin copolymers with high molecular weights can be prepared at surprisingly high production rates. More specifically, the invention relates to a polymerization process for ethylene copolymers having a density of about 0.850 to about 0.930 comprising contacting, under supercritical or solution polymerization conditions at a reaction temperature at, or above, 60 °C to 225 °C, or below, ethylene and one or more comonomers capable of insertion polymerization with a hafnocene catalyst complex derived from A) a biscyclopentadienyl hafnium organometallic compound having i) at least one unsubstituted cyclopentadienyl ligand or aromatic fused-ring substituted cyclopentadienyl ligand not having additional substitutents on said ligand, ii) one substituted or unsubstituted, aromatic fused-ring substituted cyclopentadienyl ligand, and iii) a covalent bridge connecting the two cyclopentadienyl ligands, said bridge comprising a single carbon or silicon atom with two aryl groups, each substituted with a C₁ - C₂₀ hydrocarbyl or hydrocarbylsilyl group at least one of which is a linear C₃ or greater substitutent; and B) an activating cocatalyst, preferably a precursor ionic compound comprising a halogenated tetraaryl-substituted Group 13 anion.

### DETAILED DESCRIPTION OF THE INVENTION

The bridged hafnium compounds of the invention include those having a single substituted carbon or silicon atom bridging two cyclopentadienyl-containing (Cp) ligands of the hafnium metal centers (iii), the aromatic fused-ring substituted cyclopentadienyl ligand or ligands, preferably those containing C₁-C₃₀ hydrocarbyl or hydrocarbylsilyl substituents on the ii) non-cyclopentadienyl aromatic ring. The bridge substituents preferably comprise C₁-C₂₀ linear or branched alkyl, or C₁-C₂₀ substituted-silyl, substituted phenyl groups, the alkyl or substituted-silyl substituents located in the para- or meta- positions of the aryl groups, preferably wherein at least one of said alkyl substituents is a C₃ or higher linear n-alkyl substitutent, preferably C₄ or higher. Specific examples include methyl, ethyl, n-propyl, n-butyl, sec-butyl, isobutyl, tert-butyl, n-pentyl, neopentyl, etc. Substituents present on the non-cyclopentadienyl aromatic rings of the aromatic fused-ring substituted cyclopentadienyl ligand (ii), such inclusive of indenyl and fluorenyl derivatives of cyclopentadienyl groups, typically include one or more C₁ to C₃₀ hydrocarbon or hydrocarbylsilyl groups selected from linear, branched, cyclic, aliphatic, aromatic or combined structure groups, including fused-ring or pendant configurations. Examples include methyl, isopropyl, n-propyl, n-butyl, isobutyl, tertiary butyl, neopentyl, phenyl, n-hexyl, cyclohexyl, and benzyl. For the purposes of this application the term "hydrocarbon" or "hydrocarbyl" is meant to include those compounds or groups that have essentially hydrocarbon characteristics but optionally contain not more than about 10 mol.% non-carbon atoms, such as boron, silicon, oxygen, nitrogen, sulfur and phosphorous. "Hydrocarbylsilyl" is exemplified by, but not limited to, dialkyl- and trialkylsilyls. Similarly the use of hetero-atom containing cyclopentadienyl rings or fused rings, where a non-carbon Group 14, 15 or 16 atom replaces one of the ring carbons in the Cp ring or in a ring fused thereto, is considered for this specification to be within the terms "cyclopentadienyl", "indenyl", and "fluorenyl". See, for example, the teachings of WO 98/37106, having common priority with U.S. Ser. No. 08/999,214, filed 12/29/97, and WO 98/41530, having common priority with U.S. Ser. No. 09/042,378, filed 3/13/98, incorporated by reference for purposes of U.S. patent practice.

Specific bridged hafnium catalysts include those derived from: (I) indenyl-based complexes such as the isomers, or mixtures, of (para-n-butylphenyl)(para-t-dialkyl butylphenyl)methylene (fluorenyl) (indenyl) hafnium dimethyl, (para-n-propylphenyl)(para-methylphenyl)methylene (fluorenyl) (indenyl) hafnium dimethyl, di(para-n-butylphenyl)methylene (2,7-di tertbutyl fluorenyl) (indenyl) hafnium dimethyl, (para-n-butylphenyl)(para-t-butylphenyl)methylene. (2,7-di tertbutyl fluorenyl) (indenyl) hafnium dimethyl, (para-n-butylphenyl)(para-t-butylphenyl)methylene (2,7-dimethyl fluorenyl)(indenyl) hafnium dibenzyl and di(para-n-butylphenyl) methylene (fluorenyl) (indenyl) hafnium dimethyl; and, (2) fluorenyl-based complexes such as (para-n-propylphenyl)(para-i-propylphenyl)silyl (fluorenyl) (fluorenyl) hafnium di-t-butyl, di(para-n-propylphenyl)methylene (2,7-di-tert-butyl-5-methylfluorenyl) (fluorenyl) hafnium dimethyl; and (3) cyclopentadienyl-based complexes such as the isomers, or mixtures, of (para-n-propylphenyl)(para-i-propylphenyl)methylene (fluorenyl) (indenyl) hafnium dimethyl, (para-n-butylphenyl)(para-t-butylphenyl)methylene (fluorenyl) (cyclopentadienyl) hafnium dimethyl, di(para-n-butylphenyl)methylene (2,7-di tertbutyl fluorenyl) (cyclopentadienyl) hafnium dimethyl, (para-n-butylphenyl)(para-t-butylphenyl)methylene (2,7-di tertbutyl-9-fluorenyl) (cyclopentadienyl) hafnium dimethyl, (para-n-butylphenyl)(para-t-butylphenyl)methylene (2,7-dimethyl-9-fluorenyl hafnium dimethyl, and di(para-n-butylphenyl)methylene (2,7-dimethyl fluorenyl)(cyclopentadienyl) hafnium dimethyl or dibenzyl. It has been found that the substituted bridge-containing compounds, such as those asymmetric compounds listed above, are particularly useful in accordance with the invention.

In particular, for the bridged hafnium compounds, increasing the degree of substitution on the aromatic fused-ring substituted ligand (ii) is effective for increased molecular weight, as is the use of the invention covalent bridge (iii) between the cyclopentadienyl ligands as described above. The substituted aryl groups of the bridging atom contribute to surprisingly increased activity, or productivity of the catalyst, as compared to the simpler diaryl substituted analogs, without detrimental effect on the molecular weight of the resulting copolymers. Preferably substitution on fluorenyl or indenyl radicals (ii) in the hafnium compounds will generally comprise two or more C₁ to C₃₀ hydrocarbyl or hydrocarbylsilyl substituents for a ring hydrogen of at least one 6-member fused-ring, preferably both where fluorenyl.

The invention activating cocatalyst, precursor ionizing compounds comprise Group 13 element complexes having at least two halogenated aromatic ligands such as the halogenated tetraphenyl boron and aluminum compounds exemplified in the identified prior art. Preferred aromatic ligands consist of polycyclic aromatic hydrocarbons and aromatic ring assemblies in which two or more rings (or fused ring systems) are joined directly to one another or together. These ligands, which may be the same or different, are covalently bonded directly to the metal/metalloid center. In a preferred embodiment the aryl groups are halogenated tetraaryl Group 13 element anionic complexes comprising at least one fused polycyclic aromatic hydrocarbon or pendant aromatic ring. Indenyl, napthyl, anthracyl, heptalenyl and biphenyl ligands are exemplary. Thus, for example, suitable ligands include those illustrated below, the open bond being to the Group 13 atom. See also the polycyclic compound examples in the literature for additional ligand selection, e.g., Nomenclature of Organic Compounds, Chs. 4-5 (ACS, 1974). The polycyclic aromatic may have at least three hydrogen atoms on ring carbon replaced with fluorine atoms.

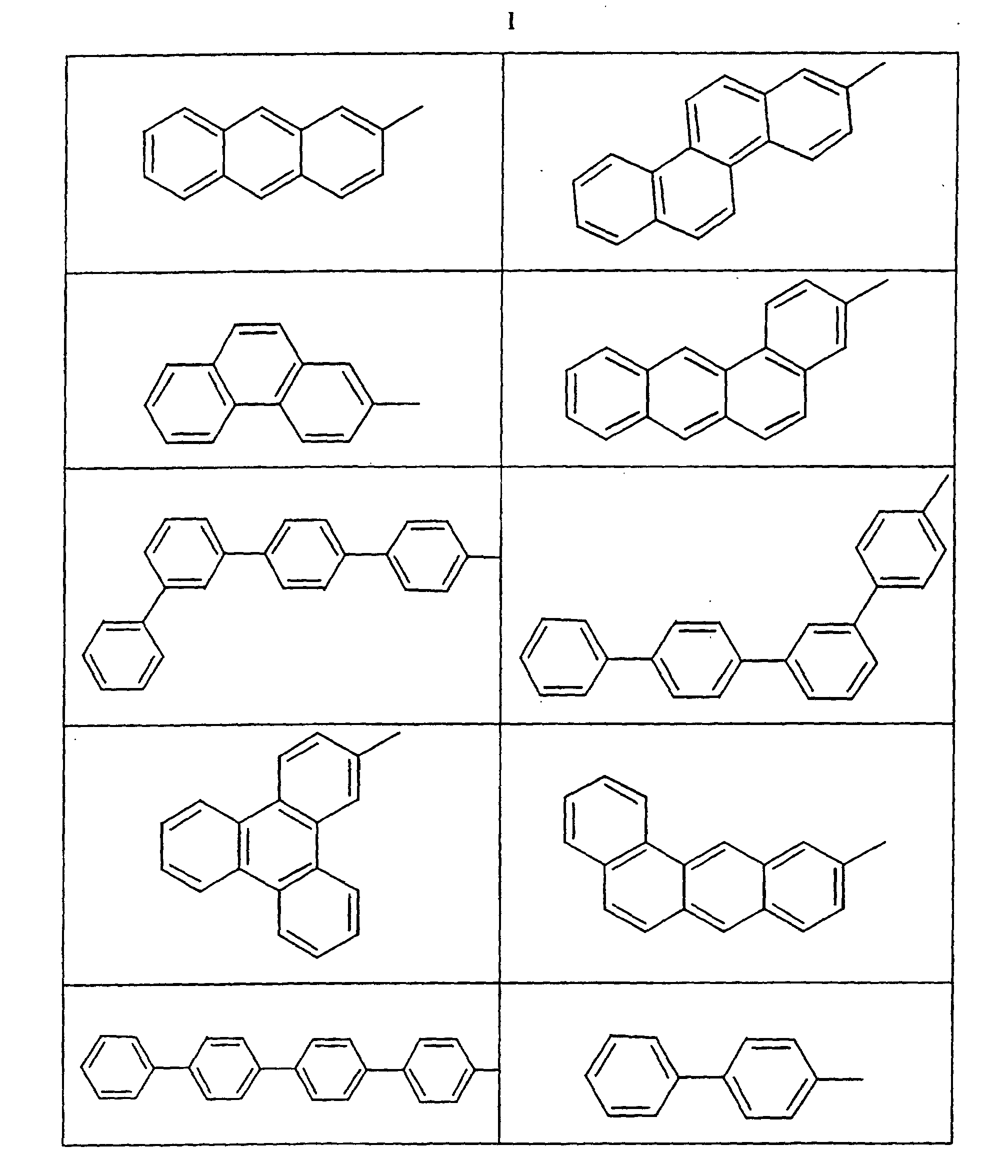

These preferred ionizing compounds comprise salts of anions comprising ligands capable of a tetrahedral orientation. Thus those ligands structurally compatible with each other in the sense of being bonded to the Group 13 metal center without hindering the bonding of additional halogenated, aryl ligands thereto are preferred. Examples include those having pendant aryl groups at the pan- or meta-position of the aryl ring closest to the metal/metalloid center, and those having fused aryl groups bonded to the aryl ring closest to the metal/metalloid center at the 2-, 3- or 3-, 4- positions. See Table I above. Those anions with mixed ligands are also suitable. Tris(perfluorophenyl) (perfluoronapthyl) borate is an illustrative complex. Thus, generically speaking, the Group 13 complexes useful in a accordance with the invention will typically conform to the following formula:

[M(A)₄₋ₙ(C)ₙ]⁻

where, M is a Group 13 element, A is an nonhindering ligand as described above, C is a hindering ligand, one having bulky substituents on the closest aryl ring bonded to the metal/metalloid center other than those described as suitable above, and n = 0, 1, or 2. See also copending application U.S. serial number 60/087447, filed 1 June 1998, and its equivalent WO 99/45042, the Teachings of which are referred to and incorporated by reference for purposes of U.S. patent practice,

For both fused aromatic rings and aromatic ring assemblies, the halogenation is highly preferred so as to allow for increased charge dispersion that contributes along with steric bulk as independent features decreasing the likelihood of ligand abstraction by the strongly Lewis acidic metallocene cation formed in the catalyst activation. Additionally, halogenation inhibits reaction of the hafnium cation with any remaining carbon-hydrogen bonds of the aromatic rings, and perhalogenation precludes such potential undesirable reactions. Thus it is preferred that at least one third of hydrogen atoms on carbon atoms of the aryl ligands can be replaced by halogen atoms, and more preferred that the aryl ligands be perhalogenated. Fluorine is the most preferred halogen, perfluorinated aryl ligands are most preferred.

Means of preparing ionic catalyst systems comprising catalyticalty active cations of the hafnium compounds and suitable noncoordanatine anions are conventionally known, see for example U.S. patent 5,198,401, WO 92/00333, WO 97/22639, and EP 0 612 768. Typically the methods comprise obtaining from commercial sources or synthesizing the selected transition metal compounds comprising an abstractable ligand, e.g., hydride, halide, alkyl, alkenyl or hydro-carbyl-silyl group, and contacting them with a noncoordinating anion source or suitable precursor compounds in a suitable solvent. The anion precursor compound abstracts a monoanionic ligand (or one monoanionic bond of bidentale alkenyl ligands) that completes the valency requirements of the preferred hafnium metallocene compounds. The abstraction leaves the hafnocenes in an essentially cationic state which is counterbalanced by the stable, compatible and bulky, noncoordinating anions according to the invention. Each of the documents of this paragraph are incorporated by reference for purposes of U.S. patent practice.

The noncoordinating anions are preferably introduced into the catalyst preparation step as ionic compounds having an essentially cationic complex which abstracts a non-cyclopentadienyl, labile ligand of the transition metal compounds which upon abstraction of the non-cyclopentadienyl ligand, leave as a by-product the noncoordinating anion portion. Hafnium compounds having labile hydride, alkyl, or silyl ligands on the metal center are highly preferred for the ionic catalyst systems of this invention since known in situ alkylation processes may result in competing reactions and interactions that tend to interfere with the overall polymerization efficiency under high temperature conditions in accordance with the preferred process embodiments of the invention.

Suitable cations for precursor compounds capable of providing the noncoordinating anions of the invention cocatalysts include those known in the art. Such include the nitrogen-containing cations such as those in U.S. patent 5,198,401, the carbenium, oxonium or sulfonium cations of US patent 5,387,568, metal cations, e.g., Ag+ or Li+, the silylium cations of WO 96/08519, and the hydrated salts of Group 1 or 2 metal cations of WO 97/22635.

Examples of preferred precursor salts of the noncoordinating anions capable of ionic cationization of the metallocene compounds of the invention, and consequent stabilization with a resulting noncoordinating anion include trialkyl-substituted ammonium salts such as triethylammonium tetrakis(perfluoronapthyl) or tetrakis(perfluoro-4-biphenyl)boron, tri(n-butyl)ammonium tetrakis(perfluoronapthyl) or tetrakis(perfluoro-4-biphenyl)boron, tri(n-octyl)ammonium tetrakis(perfluoronapthyl) or tetrakis(perfluoro-4-biphenyl)boron, trimethylammonium tetrakis(perfluoronapthyl) or tetrakis(perfluoro-4-biphenyl)boron, tributylammonium tetrakis(perfluoronapthyl) or tetrakis(perfluoro-4-biphenyl)boron, tripropylammonium tetrakis(perfluoronapthyl) or tetrakis(perfluoro-4-biphenyl), tri(n-butyl)ammonium tetrakis(perfluoronapthyl) or tetrakis(perfluoro-4-biphenyl)boron and the like, N,N-dialkyl anilinium salts such as N,N-dimethylanilinium tetrakis(perfluoronapthyl) or tetrakis(perfluoro-4-biphenyl)boron, N,N-di(n-dodecyl)anilinium tetrakis(perfluoronapthyl) or tetrakis(perfluoro-4-biphenyl)boron, N,N-2,4,6-pentamethylanilinium tetrakis(perfluoronapthyl) or tetrakis(perfluoro-4-biphenyl)boron and the like; dialkyl ammonium salts such as di-(n-dodecyl)ammonium tetrakis(perfluoronapthyl) or tetrakis(perfluoro-4-biphenyl)boron, dicyclohexylammonium. tetrakis(perfluoronapthyl) or tetrakis(perfluoro-4-biphenyl)boron and the like; and triaryl phosphonium salts such as triphenylphosphonium tetrakis(perfluoronapthyl) or tetrakis(perfluoro-4-biphenyl)boron, tri(methylphenyl)phosphonium tetrakis (perfluoronapthyl) or tetrakis(perfluoro-4-biphenyl)boron, tri(dimethylphenyl) phosphonium tetrakis(perfluoronapthyl) or tetrakis(perfluoro-4-biphenyl)boron and the like. See also the long chain group-containing nitrogen Lewis acid complexes (e.g., of protonated ammonium salts) of WO 97/35983, the catalyst activators of which are suitable in accordance with this invention and the teachings of which is incorporated by reference for purposes of US prosecution.

Further examples of suitable anionic precursors include those comprising a stable carbenium ion, and a compatible non-coordinating anion. These include tropillium tetralcis(perfluoronapthyl) or tetrakis(perfluoro-4-biphenyl) borate, triphenylmethylium tetrakis(perfluoronapthyl) or tetrakis(perfluoro-4-biphenyl) borate, benzene (diazonium) tetrakis(perfluoronapthyl) or tetrakis(perfluoro-4-biphenyl) borate. The essentially structurally equivalent silylium borate or aluminate salts are similarly suitable.

The term "scavenger" as used in this application is used in its art-recognized sense of being sufficiently Lewis acidic to coordinate with polar contaminates and impurities adventiously occurring in the polymerization feedstreams or reaction medium. Such impurities can be inadvertently introduced with any of the polymerization reaction components, particularly with solvent, monomer and catalyst feed, and adversely affect catalyst activity and stability. In particular, for processes utilizing recycle streams of unconverted monomer for reprocessing, the necessity to use polar compounds as catalyst deactivators, or "killers", such as water or lower alcohols, effectively necessitates the use of scavengers, as does the natural occurrence of polar impurities in monomer feedstreams. It can result in decreasing or even elimination of catalytic activity, particularly when a metallocene cation-noncoordinating anion pair is the catalyst system. The polar impurities, or catalyst poisons include water, oxygen, metal impurities, etc. Preferably steps are taken before provision of such into the reaction vessel, for example by chemical treatment or careful separation techniques after or during the synthesis or preparation of the various components, but some minor amounts of scavenging compound will still normally be required in the polymerization process itself.

Typically the scavenging compound will be an organometallic compound such as the Group-13 organometallic compounds of US patent 5,241,025, EP-A-0 426 638 and those of U.S. patent 5,767,208. Exemplary compounds include triethyl aluminum, triethyl borane, tri-isobutyI aluminum, methylalumoxane, isobutyl aluminumoxane, tri-n-hexyl aluminum and tri-n-octyl aluminum, those having bulky substituents covalently bound to the metal or metalloid center being preferred to minimize adverse interaction with the active catalyst. Addition of excess scavenger causes lower productivity, molecular weight and comonomer incorporation. The aluminum to hafnium molar. ratios (Al:Hf) should accordingly be less than about 100: 1, preferably less than about 75:1, more preferably less than about 50 : 1, and most preferably less than about 30:1. Molar ratios of less than 20:1 and less than 15:1 have been observed to be sufficient for the continuous processes described in this application.

The preferred scavenger is a long chain, linear tri-alkyl aluminum compound, and that longer chains are preferred over shorter chains. See WO 97/22635 and U.S. patent 5,767,208 for further discussion, this document is incorporated by reference for purposes of U.S. patent practice. Non-limiting examples of effective long chain, linear tri-alkyl ligand-containing scavengers include those comprised in the group defined by the formula M'R'R"R"', where M' is Al, and each of the R groups independently is a C₄ or higher linear, branched or cyclic alkyl group, preferably C₆ or higher, most preferably C₈ or higher. The long chain, linear alkyl aluminums where each alkyl substituent was of a length of C₈ or higher, preferably C₉ and higher were observed to exhibit optimal performance, that defined as having the least deleterious effect when used at a level in excess of the optimum level as described in the following paragraph. Specifically included are: tri-n-octyl aluminum, tri-n-decyl aluminum, tri-n-dodecyl aluminum, tri-n-hexadecyl aluminum, and the higher carbon number equivalents, e.g., (C₂₀)₃Al, including those with mixed ligation, and mixed scavenger compounds as well. The hydrolyzed derivatives of these alkyl-ligand containing organoaluminum compounds will additionally be suitable. Additionally, it will be apparent that those scavenging compounds comprising both long-chain, linear and bulky ligands or mixed linear ligands, each ligand as described above, will also be suitable, but perhaps less desirable due to more involved or expensive syntheses.

A preferred polymerization process is that designed or conducted such that the cocatalyst components, that is the transition metal compounds and the anion precursor compounds, are maintained separately until just prior to or during polymerization use in the chosen reactor or reactors. An example is the use of dual injection of each catalyst component directly into the reactor or the use of T- or multi-joint mixing chambers just prior to injection into the reactor. Additional optimization can be achieved when the scavenger compound is introduced into the reactor independently of the catalyst system or compounds, preferably after the activation of the hafnocenes with the anion precursor cocatalysts.

The process of the invention is applicable to high pressure homogeneous polymerization, preferably employing less than 30 wt% of solvent, which is substantially adiabatic and where the heat of polymerization is accommodated by a rise in temperature of the reactor contents instead of internal or external cooling. In this case, the contents consist principally of unreacted monomer. Such process may be performed, under a single or dual phase homogeneous conditions at pressures from 250 to 3000 bar, preferably from 500 to 2500 bar, with or without unreactive diluents or solvents at temperatures generally above the melting point of the polymer being produced. Such processes are industrially known and may include the use of scavenger compounds and catalyst deactivation or killing steps, see for example U.S. patent 5,408,017, WO 95/07941, and WO 92/14766. Each of these documents and their U.S. counterparts are incorporated by reference for purposes of U.S. patent practice. Preferred catalyst deactivators, or killers, include high molecular weight, non-recyclable compounds, such as poly vinyl alcohol which exhibit the functional capacity to complex with the catalysts so as to deactivate them while not forming volatile polar by-products or residual unreacted compounds.

The process of the invention is also especially applicable to homogeneous solution polymerization which is also substantially adiabatic, that is to say the heat of polymerization is accommodated by a rise in temperature of the polymerization reactor contents, here principally solvent. This adiabatic process typically would have no internal cooling and suitably no external cooling. The reactor outlet stream removes the heat of polymerization from the reactor. The productivity of such adiabatic processes can be improved by cooling the inlet solvent and/or monomer stream(s) prior to introduction into the reactor to permit a greater polymerization exotherm. Thus the catalyst, cocatalyst and scavenger selections disclosed in this application can be advantageously practiced in a continuous, solution process operated at or above 140 °C, above 150 °C or above 160 °C, up to about 225 °C. Most preferably the solution polymerization process for semicrystalline polymers operated at a temperature from 140 °C - 220 °C. Typically this process is conducted in an inert hydrocarbon solvent, linear, cyclic or branched aliphatic, or aromatic, at a pressure of from 20 to 200 bar.

These catalysts' ability to provide a commercially desirable polymer at elevated temperatures contributes to a greater exotherm, to high polymer contents in the reactor because of lower viscosity, and to reduced energy consumption in evaporating and recycling solvent, and better monomer and comonomer conversions:

The α-olefins suitable for use in the preparation of the ethylene copolymers, or for the polyethylene copolymers, are preferably C₃ to C₂₀ α-olefins, but will include higher carbon number olefins such as polymerizable macromers having up to five hundred carbon atoms, or more. Illustrative non-limiting examples of such α-olefins are one or more of propylene, 1-butene, 1-pentene, 1-hexene, 1-octene, and 1-decene. Included in the term olefins for the purposes of describing effectively copolymerized monomers are the constrained-ring cyclic monoolefins such as cyclobutene, cyclopentene, norbomene, alkyl-substituted norbornenes, alkenyl-substituted norbomenes, and the higher carbon number cyclic olefins known in the art, see U.S. patent 5,635,573, incorporated herein by reference for purposes of U.S. patent practice, and known copolymerizable diolefins, e.g., 1,4-hexadiene, ethylidene-norbornene, and vinyl-norbornene. Vinyl aromatic monomers, e.g., styrene and alkyl-substituted styrene monomers are additionally suitable. The polyethylene copolymers can range from semicrystalline to substantially amorphous; and will typically have a substantially random arrangement of at least the ethylene and the olefin comonomers. As will also be apparent to those skilled in the art, the use of asymmetrically substituted hafnium compounds of the invention enable the preparation of syndiotactic polymers from prochiral olefins, e.g., like propylene. Processes for such will also benefit from the increased productivity and molecular weights described here for ethylene copolymers.

The invention ethylene copolymer plastomers will preferably exhibit semicrystalline characteristics, e.g., melting points ranging from about 85 °C to 115 °C. The molecular weight (number-average molecular weight) of the plastomers of the invention will range from about 10,000 to about 60,000, preferably about 20,000 to about 50,000. The molecular weight for ethylene copolymer plastomers is more typically stated in terms of their polyethylene melt index (MI) (defined in ASTM 1238, Cond. E), those will typically range form 0.01 to 10.0, preferably 0.005 to 6.0, mere preferably about 0.01 to less than 3.0. Ethylene copolymer elastomers will typically have Mₙ ≥ 60,000 up to about 250,000, and can optionally comprise one or more non-conjugated or cyclic diolefin, in addition to ethylene and one or more α-olefin, typically propylene.

In terms of polymer density, the polymers capable of production in accordance the invention, can range from 0.850 to 0.930, preferably from 0.87 to 0.925, more preferably 0.89 to 0.920. The plastomers of the invention will contain about 60 to about 80 weight percent ethylene, preferably about 60 to 75 weight percent ethylene.

The catalyst complexes of the invention are also capable of significant comonomer incorporation, for example for ethylene with C₃-C₈ α-olefins and, optionally, C₅-C₂₀ non-conjugated diolefins, or with any of the other known monomers capable of copolymerization with ethylene, and are capable of high catalyst productivities and high molecular weight copolymers under industrially useful solution polymerization conditions. Such conditions are typically operated at ambient to medium high pressures (that is below about 500 bar) at temperatures ranging from about 40 °C to 140 °C, where the polymerizable monomers are contacted with the catalyst complexes in an essentially liquid phase polymerization medium such as an aliphatic or aromatic solvent or diluent. The catalysts may be supported in accordance with known support methods for metallocene catalysts, particularly for use in slurry polymerization conditions. Both solution and slurry conditions are well known in the art and easily adapted for use with the catalysts according to this invention.

### Examples

The following examples are presented to illustrate the foregoing discussion. All parts, proportions and percentages are by weight unless otherwise indicated. Although the examples may be directed to certain embodiments of the present invention, they are not to be viewed as limiting the invention in any specific respect. In Tables 1 and 2, "MCN" is an abbreviation for metallocene, particularly the hafnocenes of the invention, and "CC" is an abbreviation for co-catalyst.

### High Temperature Semi-Batch Polymerization

Ethylene/1-octene copolymerizations were carried out in a well-stirred 1 L batch reactor equipped to perform coordination polymerization in the presence of an inert hydrocarbon (hexane) solvent at pressures up to 600 psig and temperatures up to 150°C. In the vapor-liquid (VL) polymerization system, the polymerization occurs in the liquid phase whereas ethylene was continuously fed to the reactor to keep the vapor phase overhead pressure constant at 1928.4 kPa (265 psig) during the polymerization. In those experiments, the reactor temperature was kepi constant at 140°C by throttling the amount of steam added to the reactor mantle and by adjusting the amount of catalyst fed to the reactor by the pomp. Typically, 250 mL of dried bexane, 18 mL of dried 1-octene, and 1.0 mL of a 10 wt% triisobutylaluminum solution (toluene or hexane), a poisons scavenger, were fed to the reactor, which was then brought to 140°C. The reactor content was then pressurized with 1827.1 kPa (265 psi) ethylene by feeding ethylene and maintained at constant ethylene pressure throughout the polymerization. The polymerization was started by continuously feeding a pre-activated solution (toluene or hexane) of the catalyst during tle polymerization. Pre-activation was accomplished by contacting the catalyst and co-catalyst in toluene prior to introduction into the reactor. The catalyst flow rate was stopped and the reactor was allowed to cool to room temperature and depressurized. The product was precipitated out of solution and then dried in a hood at room temperature overnight.

**Example 1A:** Preparation of 6-(*p*-tert-butylphenyl)-6'-(*p*-nbutylphenyl)-fulvene. In a 1000 millsliter round bottom flask, 43.92 grams of the corresponding disubstituted bearoghenone were dissolved in tetrahydrofuran (500 milliliters). To this solution was added 90.0 milliliters of sodium cyclopentadienide in tetrahydrofuran (Aldrich, 2.0 M). The reaction mixture was allowed to stir for 3 days in an inert atmosphere (glove box). The reaction mixture was then brought out of the box and poured in 300 milliliters of water, 400 milliliters of diethyl ether were added to the mixture. The organic layer was separated. The aqueous layer was extracted once with diethyl ether. The ether layers were combined and dried with magnesium sulfate for 4 hours. The magnesium sulfate was separated by filtration. A brick-red oil was obtained after the solvent was evaporated. The product was purified by column chromatography (silica gel, hexane). This gave 39.11 grams of 6-(*p*-tert-butylphenyl)-6'-(*p*-nbutylphenyl)-fulvene. The structure of the product was easily determined by the ¹H NMR collected in CDCl₃ at room temperature. Small impurities are observed in the spectrum, but these impurities do not affect the subsequent reaction.

**Example 1B:** Preparation of 6-(*p*-tert-butylphenyl)-6'-(*p*-methylphenyl)-fulvene: In a 100 milliliter round bottom flask, 5.13 grams of the appropriated disubstituted benzophenone were dissolved in tetrahydrofuran (50 milliliters). To this solution was added 10.0 milliliters of sodium cyclopentadienide in tetrahydrofuran (Aldrich, 2.0 M). The reaction mixture was allowed to stir for 3 days in an inert atmosphere (glove box). The reaction mixture was then brought out of the box and poured in 30 milliliters of water. 100 milliliters of diethyl ether were added to the mixture. The organic layer was separated. The aqueous layer was extracted once with diethyl ether. The ether layers were combined and dried with magnesium sulfate for 4 hours. The magnesium sulfate was separated by filtration. A brick-red oil similar to the compound described above was obtained after the solvent was evaporated. The product was purified by column chromatography (silica gel, methylenechloride:hexane::9:1). This gave 2.32 grams of 6-(*p*-tert-butylphenyl)-6'-(*p*-methylphenyl)-fulvene. The structure of the product was easily determined by the ¹H NMR collected in CDCl₃ at room temperature. Small impurities are observed in the spectrum, but these impurities do not affect the subsequent reaction.

**Example 2A**: Preparation of (*p*-tBuPh)(*p*-nBuPh)C(Cp)(Flu)Li. 2.317 grams of lithium fluorenyl were suspended in 40 milliliters of toluene. To this suspension was added a solution containing 4.608 grams of 6-(*p*-tert-butylphenyl)-6'-(*p*-nbutylphenyl)-fulvene dissolved in approximately 80 milliliters of toluene. The reaction is allowed to stir for 30 minutes. After removing the solvent and triturating with pentane, the solid product was collected by filtration and washed with pentane. This procedure afforded 6.17 grams of product. The identity of the product was established by ¹H NMR in C₆D₆ at room temperature. The peaks in the aromatic region are broad but clearly defined and easily assigned.

**Example 2B:** Preparation of (*p*-tBuPh)(*p*-MePh)C(Cp)(Flu)Li. 1.192 grams of lithium fluorenyl were suspended in 40 milliliters of toluene. To this suspension was added a solution containing 2.081 grams of 6-(*p*-tert-butylphenyl)-6'-(*p*-methylphenyl)-fulvene dissolved in approximately 80 milliliters of toluene. The reaction is allowed to stir for 1 hour. After removing the solvent and triturating with pentane, the solid product was collected by filtration and washed with pentane. This procedure afforded 2.960 grams of product. The identity of the product was established by ¹H NMR in C₆D₆ at room temperature. The peaks in the aromatic region are broad but clearly defined and easily assigned.

**Example 3A:** Preparation of (*p*-tBuPh)(*p*-nBuPh)C(Cp)(Flu)HfCl₂. To a diethyl ether solution containing 5.45 grams of (*p*-tBuPh)(*p*-nBuPh)C(Cp)(Flu)Li was added 6.6 milliliters of n-BuLi (Aldrich, 1.6 M) The lithiation reaction was allowed to stir for 2.5 hours. To the dilithio salt was added 3.45 grams of HfCl₄ as a solid. The reaction mixture was stirred for 14 hours. The lithium chloride was separated by filtration. After evaporating the solvent, the product was extracted with dichloromethane to remove residual lithium chloride. The solvent was removed by evaporation. This left a dark oil. To the oil was added approximately 80 milliliters of pentane and 10 milliliter of diethyl ether. This caused a small amount of solids to precipitate. The mixture was allowed to sit in the refrigerator for 14 hours. This cooling caused more precipitation. The solid product was collected by filtration and dried under vacuum to afford 2.532 grams of an orange solid. Cooling the filtrate for another 4 hours gave a second crop of product (0.680 grams) for a collective yield of 3.212 grams. The identity of the product was established by ¹H NMR in C₆D₆ at room temperature.

**Example 3B:** Preparation of (*p*-tBuPh)(*p*-MePh)C(Cp)(Flu)HfCl₂. To a diethyl ether solution containing 2.96 grams of (*p*-tBuPh)(*p*-nMePh)C(Cp)(Flu)Li was added 3.9 milliliters of n-BuLi (Aldrich, 1.6 M) The lithiation reaction was allowed to stir for 4 hours. To the dilithio salt was added 2.00 grams of HfCl₄. The reaction mixture was stirred for 14 hours. After evaporating the solvent, the product was extracted with dichlorometharie to remove the lithium chloride. The solvent was removed by evaporation. This left a semisolid which was washed with pentane. The product was collected by filtration and rinse with a small amount of cold pentane to remove hydrocarbon impurities. This procedure provided 3.733 grams of an orange solid. The identity of the product was established by ¹H NMR in C₆D₆ at room temperature.

**Example 4A**: Methylation of (*p*-tBuPh)(*p*-nBuPh)C(Cp)(Flu)HfCl₂. Three equivalents of MeMgBr (Aldrich, 3.0 M in diethyl ether) were added to a cold suspension containing 3.63 grams of (*p*-tBuPh)(*p*-nBuPh)C(Cp)(Flu)HfCl₂ in toluene (-35° C). The reaction was allowed to reach room temperature over 30 minutes. The reaction was then heated to 80° C for two hours. The heating turns the reaction mixture dark brown. The reaction was filtered using celite to remove a dark solid. To the filtrate was added an excess of trimethylchlorosilane and stirred for 2 hours. This last step ensures that the excess MeLi is quenched. The solvent is replaced by methylenedichloride, and the LiCl precipitate was separated by filtration. The volume is reduced to a minimum and pentane is added to induce precipitation. After cooling overnight the yellow product is collected by filtration. This procedure afforded 1.70 grams of a bright yellow solid. The identity of the product was established by ¹H NMR in C₆D₆ at room temperature.

**Example 4B:** Methylation of (*p*-tBuPh)(*p*-MePh)C(Cp)(Flu)HfCl₂. Three equivalents of MeMgBr (Aldrich, 3.0 M in diethyl ether) were added to a cold suspension containing 3.70 grams of (*p*-tBuPh)(*p*-MePh)C(Cp)(Flu)HfCl₂ in toluene (-35° C). The reaction was allowed to reach room temperature over 30 minutes. The reaction was then heated to 80° C for two hours. The reaction was filtered through celite to remove a dark solid. To the filtrate was added an excess of trimethylchlorosilnane and stirred for 3 hours. This last step ensures that the excess MeLi is quenched. The solvent is replaced by methylenedichloride, and the LiCl precipitate was separated by filtration. The volume is reduced to a minimum and pentane is added to induce precipitation. After cooling overnight the yellow product is collected by filtration. The identity of the product was established by ¹H NMR in C₆D₆ at room temperature.

**Example 5**: Synthesis of (*p*-nBuPh)(*p*-tBuPh)C(Cp)(2,7-t-BuFlu)HfCl₂: To an ether solution consisting of 1.35 grams of 6,6'-diphenylfulvene was added a solution consisting of 1.12 grams of lithium 2,7-di-tert-butylfluorene. After 20 minutes, a beige solid began to precipitate. The reaction was stirred for 6 hours. One equivalent of nBuLi (7.38 milliliters, 1.6M in diethyl ether, Aldrich) was added to the reaction. After 15 hours the reaction color changed to a burgundy-red and red a precipitate formed. To the red mixture was added 1.26 grams of hafniumtetrachloride. The reaction was allowed to stir for 3 hours. The mixture was orange-yellow with copious precipitate. The solvent was replaced with dichloromethane and filtered. It was necessary to wash the residual solids several times to extract more product. The solvent was removed under reduced pressure. The product was triturated with pentane and collected by filtration. This left an orange solid (1.045 grams).

Synthesis of (*p*-nBuPh)(*p*-tBuPh)C(Cp)(2,7-t-BuFlu)HfMe₂: To a cold solution (-35° C) containing 1.00 grams of (*p*-nBuPh)(*p*-tBuPh)C(Cp)( 2,7-t-BuFlu)HfCl₂ in toluene was added three equivalents of MeMgBr (3.0 M, Aldrich). The reaction was allowed to reach room temperature slowly and then heated at 80° C for 3 hours. This turned the reaction dark brown. The reaction was brought into the glovebox and passed through a celite pad. This allowed an orange solution to be collected. The solvent volume was reduced and the product triturated with pentane. The product was collected by filtration (0.300 grams).

| Symbols for Tables 1-3 below: | |
|---|---|
| Catalyst ("Cat") | Metallocene ("MCN") Compound |
| A (Comparative) | Diphenylmethylene(cyclopentadienyl)(fluorenyl) hafnium dimethyl |
| B(Comparative) | (p-tert-butylphenyl)(p-methylphenyl)methylene(cyclopentadienyl) (fluorenyl) hafnium dimethyl |
| C | (p-tert-butylphenyl)(p-n-butylphenyl)methylene(cyclopentadienyl) (fluorenyl) hafnium dimethyl |
| D | (p-tert-butylphenyl)(p-n-butylphenyl)methylene(cyclopentadienyl) (2,7-di-tert-butylfluorenyl) hafnium dimethyl |
| E (Comparative) | di(p-tert-butylphenyl)methylene(cyclopentadienyl) (2,7-di-tert-butylfluorenyl) hafnium dimethyl |

| Activator ("Act") | Compound |
|---|---|
| I | [N,N-dimethylanilinium)[tetrakis(pentafluorophenyl)borate] |

**Table 1**

| Cat/Act* | Yield (g) | Activity (g/mmol*min) | Wt % C8 | Mw | Mn | Mw/Mn |
|---|---|---|---|---|---|---|
| 1) A/I | 16.8 | 375 | 22.7 | 155562 | 60828 | 2.56 |
| 2) B/I | 17.8 | 147 | 20.8 | 181976 | 64125 | 2.84 |
| 3) C/I | 19.5 | 517 | 21.0 | 153617 | 16358 | 9.39 |
| 4) C/I | 10.9 | 743 | Nm | 340782 | 75466 | 4.52 |
| 5) C/I | 13.9 | 1037 | Nm | 187160 | 79822 | 2.34 |

| | | | | | | |
|---|---|---|---|---|---|---|
| * All polymerizations ran for 10 minutes, with the exception of B/I, which was 19 minutes. The symbol "nm" means not measured. | | | | | | |

**Table 2**

| Cat/Act* | Yield (g) | Activity (g/mmol*min) | Ml(dg/min) (ASTM D-1238(E) |
|---|---|---|---|
| 1) A/I | 16.8 | 375 | 0.041 |
| 6) D/I | 14.1 | 778 | 0.009 |
| 7) D/I | 19.0 | 715 | 0.012 |

| | | | |
|---|---|---|---|
| * Polymerizations conducted as for Table 1. | | | |

**Table 3**

| Cat/Act* | Activity (g-polymer/ g-cat) | Wt% C8 | Mw | Mn | Mw/Mn |
|---|---|---|---|---|---|
| 8) A/I¹ | 250 | 29.2 | 152.7 | 69.1 | 2.22 |
| 9) E/I ² | 273 | 24.8 | 215.3 | 98.9 | 2.18 |

| | | | | | |
|---|---|---|---|---|---|
| * notes : All polymerizations were conducted as done for Tables 1 and 2 above except that Table 3 reactions were stopped after 30 min. ¹ The values reported were the averages of 5 runs where the amount of MCN was varied between 10.5 and 20 mg. ² The values reported were the averages of 3 runs where the amount of MCN was varied between 5 and 10.5 mg. | | | | | |

As can been seen in Table 1, the invention catalysts of examples 3) - 5) show significant improvement in actives, and to a lesser extent, improvements in weight- and number-average molecular weight where the bridge aryl-groups are substituted in accordance with the invention, as opposed to where not. The Mw/Mn measurement for 3) is suspect but the variance observed is not understood at this time. It is believed that a repeat under the conditions used would yield molecular weight values in line with 4) and 5). Table 2 illustrates a direct comparison for the MCN "A", with unsubstituted bridge aryl groups and unsubstituted fluorenyl groups, against MCN "D" having both bridge aryl group substitution and fluorenyl group substitution in accordance with the invention. Table 3 illustrates MCN "E" with alkyl substitution on the bridge aryl groups, that substitution not including the C₃ or greater linear n-alkyl of the invention, and substitution on fluorenyl group as for MCN "D" of the invention. It is apparent that the activities of 8) and 9) are comparable but with 9) showing improvement in molecular weights. Since 8) illustrates a standard for comparison with MCN "A", the same standard for Tables 1 and 2, "E" is expected to show similar activities to those exhibited by "A" and is inferior to "C" and "D" of the invention.

## Claims

1. A polymerization process for ethylene copolymers having a density of 0.850 to 0.930 comprising contacting, under homogeneous polymerization conditions at a reaction temperature at or above 60 °C to 250 °C, ethylene and one or more comonomers capable of insertion polymerization with a hafnocene catalyst complex derived from
A) a biscyclopentadienyl hafnium organometaliic compound having
i) at least one unsubstituted cyclopentadienyl ligand or aromatic fused-ring substituted cyclopentadienyl ligand, where a non-carbon Group 14, 15 or 16 atom could replace one of the ring carbons in the cyclopentadienyl ring or in a ring fused thereto.
ii) one aromatic fused-ring substituted cyclopentadienyl ligand, where a non-carbon Group 14, 15 or 16 atom could replace one of the ring carbons in the cyclopentadienyl ring or in a ring fused thereto.
iii) and a covalent bridge connecting the two cyclopentadienyl ligands, said bridge comprising a single carbon or silicon atom with two aryl groups, each substituted with a C₁ - C₂₀ hydrocarbyl or hydrncarbylsilyl at least one of which is a linear C₃ or greater substitutent; and
B) an activating cocatalyst compound.

2. The process of claim 1 therein said activating cocatalyst compound comprises a halogenated tetraaryl-substituted Group 13 anion wherein at least one aryl substituent contains at least two cyclic aromatic rings.

3. The process of claim 2 wherein the aryl substituent comprises at least one fused polycyclic aromatic ring.

4. The process of claim 3 wherein at least three hydrogen atoms on ring carbons have been replaced with fluorine atoms in the fused polycyclic aromatic ring.

5. The process of claim 4 wherein said halogenated tetraaryl Group 13 anion is [tetrakis(perfluoro-naphthyl)borate].

6. The process of claim 2 wherein the aryl groups of said halogenated tetraaryl Group 13 anion comprises at least one aromatic ring pendant in the 4 position to a phenyl ligand.

7. The process of claim 6 wherein said halogenated tetraaryl Group 13 anion is [tetrakis(perfluoro-4-biphenyl)borate].

8. The process of any of claims 2-7 wherein said cocatalyst compound comprises an essentially cationic complex selected from substituted or unsubstituted anilinium, ammonium, carbenium and silylium cationic complexes.

9. The process of claims 1-8 wherein said aromatic fused-ring substituted cyclopentadienyl ligand ii) is a substituted or unsubstituted fluorenyl ligand.

10. The process of any of claims 1-9 wherein said unsubstituted cyclopentadienyl ligand or aromatic fused-ring substituted cyclopentadienyl ligand i) is an unsubstituted cyclopentadienyl or indenyl ligand.

11. The process of any of claims 1-10 wherein said hafnium compound is selected from the group consisting of (p-tert-butylphenyl)(p-n-butylphenyl)methylene(cyclopentadienyl) (fluorenyl) hafnium dimethyl, (p-tert-butylphenyl)(p-n-butylphenyl)methylene(cyclopentadienyl)(2,7-dimethyl-9-fluorenyl) hafnium dimethyl and (p-tert-butylphenyl)(p-n-butylphenyl)methylene(cyclopentadienyl)(2,7-di-tert-butyl-9-fluorenyl) hafnium dimethyl.

12. The process of any of claims 1-11 wherein said hafnium compound is covalently bridged between the biscyclopentadienyl ligands with a substituted silicon atom.

13. The process of any of claims 1-12 wherein said homogeneous polymerization conditions are adiabatically conducted in a continuous polymerization process.

14. The process of any of claims 1-13 wherein the reaction temperature is in a range of 140 °C to 220 °C.

15. The process of claim 13 wherein said one or more comonomers capable of insertion polymerization are selected from the group consisting of propylene, 1-butene, 1-hexene, 1-octene, 1, 4-hexadiene, ethylidene-norbornene and vinyl norbornene.

16. The process of claim 14 wherein said homogeneous polymerization conditions are conducted in a continuous process at a pressure of at least 500 bar.

17. The process of claim 16 wherein said one or more comonomers capable of insertion polymerization are selected from the group consisting of propylene, 1-butene, 1-hexene, and 1-octene.

## Patentansprüche

1. Polymerisationsverfahren für Ethylen-Copolymere mit einer Dichte von 0,850 bis 0,930, bei dem unter homogenen Polymerisationsbedingungen bei einer Reaktionstemperatur von oder oberhalb von 60°C bis 250°C Ethylen und ein oder mehrere insertionspolymerisationfähige Comonomere mit einem Hafnocen-Katalysatorkomplex kontaktiert werden, der abgeleitet ist von:
A) einer Biscyclopentadienylhafnium-metallorganischen Verbindung mit
i) mindestens einem unsubstituierten Cyclopentadienylliganden oder mit aromatischem, kondensierten Ring substituierten Cyclopentadienylliganden, bei dem ein Nichtkohlenstoffatom der Gruppe 14, 15 oder 16 eines der Ringkohlenstoffatome in dem Cyclopentadienylring oder einem damit kondensierten Ring substituieren kann,
ii) einem mit aromatischem kondensierten Ring substituierten Cyclopentadienylliganden, bei dem ein Nichtkohlenstoffatom der Gruppe 14, 15 oder 16 eines der Ringkohlenstoffatome in dem Cyclopentadienylring oder einen damit kondensierten Ring substituieren kann,
iii) und einer kovalenten Brücke, die die beiden Cyclopentadienylliganden miteinander verknüpft, wobei die Brücke ein einziges Kohlenstoff- oder Siliciumatom mit zwei Arylgruppen umfasst, die jeweils mit einem C₁- bis C₂₀-Kohlenwasserstoffoder -Kohlenwasserstoffsilyl substituiert sind, wobei mindestens einer davon ein linearer C₃- oder größer Substituent ist, und
B) einer aktivierenden Co-Katalysatorverbindung.

2. Verfahren nach Anspruch 1, bei dem die aktivierende Co-Katalysatorverbindung ein halogeniertes Tetraaryl-substituiertes Gruppe-13-Anion umfasst, bei dem mindestens ein Arylsubstituent mindestens zwei cyklische aromatische Ringe enthält.

3. Verfahren nach Anspruch 2, bei dem der Arylsubstituent mindestens einen kondensierten polycyklischen aromatischen Ring umfasst.

4. Verfahren nach Anspruch 3, bei dem in dem kondensierten polyzyklischen aromatischen Ring mindestens drei Wasserstoffatome an Ringkohlenstoffatomen durch Fluoratome ersetzt sind.

5. Verfahren nach Anspruch 4, bei dem das halogenierte Tetraaryl-Gruppe-13-Anion [Tetrakis(perfluornaphthyl)borat] ist.

6. Verfahren nach Anspruch 2, bei dem die Arylgruppen des halogenierten Tetraaryl-Gruppe-13-Anions mindestens einen aromatischen Ring umfassen, der in 4-Position mit einem Phenylliganden verknüpft ist.

7. Verfahren nach Anspruch 6, bei dem das halogenierte Tetraaryl-Gruppe-13-Anion [Tetrakis(perfluor-4-biphenyl)borat] ist.

8. Verfahren nach einem der Ansprüche 2 bis 7, bei dem die Co-Katalysatorverbindung einen im Wesentlichen kationischen Komplex ausgewählt aus substituierten oder unsubstituierten Anilinium-, Ammonium-, Carbenium- und Silylium-Kationenkomplexen umfasst.

9. Verfahren nach Ansprüchen 1 bis 8, bei dem der mit aromatischem kondensierten Ring substituierte Cyclopentadienylligand ii) ein substituierter oder unsubstituierter Fluorenylligand ist.

10. Verfahren nach einem der Ansprüche 1 bis 9, bei dem der unsubstituierte Cyclopentadienylligand oder mit aromatischem kondensierten Ring substituierte Cyclopentadienylligand i) ein unsubstituierter Cyclopentadienyl- oder Indenylligand ist.

11. Verfahren nach einem der Ansprüche 1 bis 10, bei dem die Hafniumverbindung ausgewählt ist aus der Gruppe bestehend aus (p-tert-Butylphenyl)(p-n-butylphenyl)methylen-(cyclopentadienyl)(fluorenyl)hafniumdimethyl, (p-tert-Butylphenyl)(p-n-butylphenyl)methylen(cyclopentadienyl)(2,7-dimethyl-9-fluorenyl)hafniumdimethyl und (p-tert-Butylphenyl)(p-n-butylphenyl)methylen(cyclopentadienyl) (2,7-di-tert-butyl-9-fluorenyl)hafniumdimethyl.

12. Verfahren nach einem der Ansprüche 1 bis 11, bei dem die Hafniumverbindung mit einem substituierten Siliciumatom kovalent zwischen den Bis-Cyclopentadienylliganden verbrückt ist.

13. Verfahren nach einem der Ansprüche 1 bis 12, bei dem die homogenen Polymerisationsbedingungen adiabatisch in einem kontinuierlichen Polymerisationsverfahren durchgeführt werden.

14. Verfahren nach einem der Ansprüche 1-13, bei dem die Reaktionstemperatur in einem Bereich von 140°C bis 220°C liegt.

15. Verfahren nach Anspruch 13, bei dem das eine oder die mehreren zur Insertionspolymerisation fähige(n) Comonomer(e) ausgewählt ist oder sind aus der Gruppe bestehend aus Propylen, 1-Buten, 1-Hexen, 1-Octen, 1,4-Hexadien, Ethylidennorbornen und Vinylnorbornen.

16. Verfahren nach Anspruch 14, bei dem die homogenen Polymerisationsbedingungen in einem kontinuierlichen Verfahren bei einem Druck von mindestens 500 bar durchgeführt werden.

17. Verfahren nach Anspruch 16, bei dem das eine oder die mehreren zur Insertionspolymerisation fähige(n) Comonomer(e) ausgewählt ist oder sind aus der Gruppe bestehend aus Propylen, 1-Buten, 1-Hexen und 1-Octen.

## Revendications

1. Procédé de polymérisation pour des copolymères d'éthylène ayant une densité de 0,850 à 0,930, comprenant la mise en contact, dans des conditions de polymérisation homogènes à une température réactionnelle dans la plage de ≥ 60°C à 250°C, d'éthylène et d'un ou plusieurs comonomères capables de polymériser par insertion avec un complexe de catalyseur au hafnocène dérivé de
A) un composé organométallique de bicyclopentadiénylhafnium ayant
i) au moins un ligand cyclopentadiényle non substitué ou un ligand cyclopentadiényle substitué par un noyau aromatique fusionné, dans lequel un atome du Groupe 14, 15 ou 16 autre que le carbone pourrait remplacer l'un des carbones du noyau dans le noyau cyclopentadiényle ou dans un noyau fusionné à celui-ci,
ii) un ligand cyclopentadiényle substitué par un noyau aromatique fusionné, dans lequel un atome du Groupe 14, 15 ou 16 autre que le carbone pourrait remplacer l'un des carbones du noyau dans le noyau cyclopentadiényle ou dans un noyau fusionné à celui-ci, et
iii) un pont covalent reliant les deux ligands cyclopentadiényle, ledit pont comprenant un seul atome de carbone ou de silicium avec deux groupes aryles substitués chacun par un hydrocarbyle ou hydrocarbylsilyle en C₁ à C₂₀ dont l'un au moins est un substituant linéaire en C₃ ou supérieur ; et
B) un composé cocatalyseur d'activation.

2. Procédé selon la revendication 1, dans lequel ledit composé cocatalyseur d'activation comprend un anion du Groupe 13 substitué par un tétraaryle halogéné, dans lequel au moins un substituant aryle contient au moins deux noyaux aromatiques cycliques.

3. Procédé selon la revendication 2, dans lequel le substituant aryle comprend au moins un noyau aromatique polycyclique fusionné.

4. Procédé selon la revendication 3, dans lequel au moins trois atomes d'hydrogène sur les carbones du noyau ont été remplacés par des atomes de fluor dans le noyau aromatique polycyclique fusionné.

5. Procédé selon la revendication 4, dans lequel ledit anion du Groupe 13 substitué par un tétraaryle halogéné est le [tétrakis(perfluoronaphtyl)borate].

6. Procédé selon la revendication 2, dans lequel les groupes aryles dudit anion du Groupe 13 substitué par un tétraaryle halogéné comprennent au moins un noyau aromatique pendant en position 4 par rapport à un ligand phényle.

7. Procédé selon la revendication 6, dans lequel ledit anion du Groupe 13 substitué par un tétraaryle halogéné est le [tétrakis(perfluoro-4-biphényl)borate].

8. Procédé selon l'une quelconque des revendications 2 à 7, dans lequel ledit composé cocatalyseur comprend un complexe essentiellement cationique choisi parmi des complexes cationiques, substitués ou non substitués, d'anilinium, d'ammonium, de carbénium et de silylium.

9. Procédé selon les revendications 1 à 8, dans lequel ledit ligand cyclopentadiényle substitué par un noyau aromatique fusionné ii) est un ligand fluorényle substitué ou non substitué.

10. Procédé selon l'une quelconque des revendications 1 à 9, dans lequel ledit ligand cyclopentadiényle non substitué ou ligand cyclopentadiényle substitué par un noyau aromatique fusionné i) est un ligand cyclopentadiényle ou indényle non substitué.

11. Procédé selon l'une quelconque des revendications 1 à 10, dans lequel ledit composé de hafnium est choisi dans le groupe constitué par le (p-tert-butylphényl)- (p-n-butylphényl)méthylène(cyclopentadiényl)(fluorényl)hafnium diméthyle, le (p-*tert*-butylphényl)-(p-n-butylphényl)méthylène(cyclopentadiényl)(2,7-diméthyl-9-fluorényl)hafnium diméthyle et le (p-*tert*-butylphényl)-(p-n-butylphényl)méthylène- (cyclopentadiényl)(2,7-di-*tert*-butyl-9-fluorényl)hafnium diméthyle.

12. Procédé selon l'une quelconque des revendications 1 à 11, dans lequel ledit composé de hafnium est ponté de manière covalente entre les ligands bicyclopentadiényle par un atome de silicium substitué.

13. Procédé selon l'une quelconque des revendications 1 à 12, dans lequel lesdites conditions de polymérisation homogènes sont conduites de manière adiabatique dans un procédé de polymérisation en continu.

14. Procédé selon l'une quelconque des revendications 1 à 13, dans lequel la température réactionnelle se situe dans une plage de 140°C à 220°C.

15. Procédé selon la revendication 13, dans lequel lesdits un ou plusieurs comonomères capables de polymériser par insertion sont choisis dans le groupe constitué par le propylène, le 1-butène, le 1-hexène, le 1-octène, le 1,4-hexadiène, l'éthylidène-norbornène et le vinylnorbornène.

16. Procédé selon la revendication 14, dans lequel lesdites conditions de polymérisation homogènes sont conduites dans un procédé en continu sous une pression d'au moins 500 bars.

17. Procédé selon la revendication 16, dans lequel lesdits un ou plusieurs comonomères capables de polymériser par insertion sont choisis dans le groupe constitué par le propylène, le 1-butène, le 1-hexène et le 1-octène.
